# EUROPÄISCHE PATENTSCHRIFT

(11) **EP 3 883 876 B1**
(45) Veröffentlichungstag und Bekanntmachung des Hinweises auf die Patenterteilung: **19.10.2022**
(21) Anmeldenummer: 19798656.5
(22) Anmeldetag: 12.11.2019
(51) Int. Cl.: B66B 19/00, B66B 7/02

(54) **VERFAHREN UND MONTAGEVORRICHTUNG ZUR AUTOMATISIERTEN BESTIMMUNG EINER BOHRPOSITION EINES BOHRLOCHS**
METHOD AND MOUNTING DEVICE FOR THE AUTOMATED DETERMINATION OF A DRILLING POSITION A BOREHOLE
PROCÉDÉ ET DISPOSITIF DE MONTAGE DESTINÉS À LA DÉTERMINATION AUTOMATISÉE D'UNE POSITION DE FORAGE D'UN TROU DE FORAGE

(30) Priorität: 20.11.2018 EP 18207127
(43) Veröffentlichungstag der Anmeldung: 29.09.2021
(73) Patentinhaber: INVENTIO AG, 6052 Hergiswil (CH)
(72) Erfinder: CAMBRUZZI, Andrea, 8057 Zürich (CH); OLCZYK, Eliza, 6003 Luzern (CH); BÜTLER, Erich, 6030 Ebikon (CH); SIMMONDS, Oliver, 6004 Luzern (CH); ZIMMERLI, Philipp, 4624 Härkingen (CH); BITZI, Raphael, 6003 Luzern (CH)
(74) Vertreter: Inventio AG
(86) Internationale Anmeldenummer: PCT/EP2019/080924
(87) Internationale Veröffentlichungsnummer: WO 2020/104240

(56) Entgegenhaltungen:
- WO-A1-2017/016781
- WO-A1-2017/016782
- WO-A1-2017/167719
- WO-A1-2018/145984

## Beschreibung

Die Erfindung betrifft ein Verfahren zur automatisierten Bestimmung einer Bohrposition eines Bohrlochs mit den Merkmalen des Anspruchs 1 und eine Montagevorrichtung zur automatisierten Bestimmung einer Bohrposition eines Bohrlochs mit den Merkmalen des Anspruchs 15.

In der WO 2017/016782 A1 wird ein Verfahren zum Durchführen eines Installationsvorgangs in einem Aufzugschacht einer Aufzuganlage beschrieben, bei welchem auch Bohrlöcher in eine Schachtwand eines Aufzugschachts der Aufzuganlage gebohrt werden. Es wird beschrieben, dass mittels einer Scankomponente eine Beschaffenheit der Schachtwand bezüglich Unebenheiten, Absätzen oder Löchern erfasst werden kann. Die so gewonnenen Informationen können beispielsweise für eine Änderung einer geplanten Bohrposition der Bohrlöcher genutzt werden. Die WO 2017/016782 A1 enthält aber keine weiteren Informationen, wie die geplante Bohrposition geändert werden soll.

In der WO 2018/145984 A1 wird ein Verfahren zur Fixierung eines Schienenbügels einer Aufzuganlage an einer Schachtwand beschrieben. Der Schienenbügel wird dabei an die Schachtwand geklebt, wobei er zusätzlich durch ein Befestigungselement, beispielsweise in Form einer Schraube an der Schachtwand fixiert werden kann. Um eine Schraube in eine Schachtwand einschrauben zu können, muss zunächst eine Bohrposition eines Bohrlochs bestimmt und anschliessend das Bohrloch gebohrt werden. Der Schienenbügel weist eine Durchgangsöffnung auf, durch welche die Schraube im eingeschraubten Zustand hindurch ragt. Zum Festlegen der Bohrposition wird zunächst ein möglicher Wandbereich für die Bohrposition und damit eine Abstützfläche des Schienenbügels an der Schachtwand festgelegt, dessen Oberflächenkontur bestimmt wird. Die Oberflächenkontur wird überprüft und Unregelmässigkeiten werden erkannt. Die Bohrposition und damit die genannte Abstützfläche werden so festgelegt, dass es keine Überschneidungen mit den erkannten Unregelmässigkeiten gibt.

Demgegenüber ist es insbesondere die Aufgabe der Erfindung, ein Verfahren und eine Montagevorrichtung zur automatisierten Bestimmung einer Bohrposition eines Bohrlochs vorzuschlagen, mittels welchem schnell eine Bohrposition gefunden werden kann, an der die Bohrung mit hoher Wahrscheinlichkeit erfolgreich ausgeführt werden kann. Erfindungsgemäss wird diese Aufgabe mit einem Verfahren mit den Merkmalen des Anspruchs 1 und einer Montagevorrichtung mit den Merkmalen des Anspruchs 15 gelöst.

Beim erfindungsgemässen Verfahren zur automatisierten Bestimmung einer Bohrposition eines Bohrlochs wird eine Bohrposition eines Bohrlochs für ein Befestigungsmittel bestimmt, mittels welchem ein Bauteil an einem möglichen Wandbereich einer Wand befestigt werden kann. Das Bauteil weist eine Anlagefläche und eine Durchgangsöffnung auf, wobei in einem befestigten Zustand des Bauteils an der Wand zumindest ein Teil der Anlagefläche an einer Abstützfläche der Wand anliegt und das im Bohrloch fixierte Befestigungsmittel durch die Durchgangsöffnung hindurch ragt. Der genannte mögliche Wandbereich, an dem das Bauteil befestigt werden soll, ist hauptsächlich plan und erstreckt sich in einer ersten Richtung (x) und einer zur ersten Richtung (x) senkrechten zweiten Richtung (z). Eine Soll-Abstützfläche innerhalb des Wandbereichs, an dem die Anlagefläche des Bauteils im montierten Zustand zumindest teilweise anliegt, und damit ein Soll-Bohrpositionsbereich für das Bohrloch sind vorgegeben.

Das erfindungsgemässe Verfahren weist folgende Verfahrensschritte auf:
- Bestimmen einer Oberflächenkontur des Wandbereichs,
- Überprüfen der Oberflächenkontur des Wandbereichs und Erkennen von ersten Unregelmässigkeiten in der Oberflächenkontur mittels einer ersten Erkennungsregel,
- Bestimmen eines primären möglichen Abstützflächenbereichs und eines primären möglichen Bohrpositionsbereichs für das Bohrloch, welche keine ersten Unregelmässigkeiten der Oberflächenkontur aufweisen,
- Überprüfen der Oberflächenkontur des primären möglichen Bohrpositionsbereichs für das Bohrloch und Erkennen von zweiten Unregelmässigkeiten in der Oberflächenkontur mittels einer zweiten Erkennungsregel und
- Bestimmen der Bohrposition für das Bohrloch innerhalb des primären möglichen Bohrpositionsbereichs in der Art, dass die Oberflächenkontur an der Bohrposition keine zweiten Unregelmässigkeiten aufweist.

Die genannten Verfahrensschritte werden insbesondere in der angegebenen Reihenfolge ausgeführt. Es ist aber auch möglich, dass sie in einer anderen Reihenfolge ausgeführt werden.

Nach der Bestimmung der genannten Bohrposition wird das Bohrloch insbesondere von einer Montagevorrichtung zur automatisierten Durchführung von Montageschritten mittels einer Bohrvorrichtung, beispielsweise einer Schlagbohrmaschine, an der genannten Bohrposition gebohrt. Das Befestigen des Bauteils kann ebenfalls von einer Montagevorrichtung oder von einem Monteur von Hand erfolgen.

Unter einer automatisierten Bestimmung soll hier verstanden werden, dass die Bestimmung von einer Steuerungseinrichtung unter Anwendung von vorgegebenen Regeln durchgeführt wird. In der Steuerungseinrichtung ist dazu insbesondere ein Programm gespeichert, in welchem die genannten Regeln kodiert sind. Die automatisierte Bestimmung kann beispielsweise von einem Bediener oder von einem anderen Programm gestartet werden. Die Steuerungseinrichtung ist insbesondere Teil einer Montagevorrichtung zur automatisierten Durchführung von Montageschritten.

Das genannte Bauteil, das mittels eines Befestigungsmittels, beispielsweise einer Schraube oder eines Ankerbolzens, an einer Wand befestigt wird, kann auf unterschiedlichste Weise ausgeführt sein. Das Bauteil kann beispielsweise als ein so genanntes Schachtmaterial einer Aufzuganlage ausgeführt sein. Darunter sind alle Bauteile zu verstehen, die in einem Aufzugschacht der Aufzuganlage an einer Schachtwand befestigt werden. Dazu zählen beispielsweise so genannte Schienenbügel oder Schienenbügelteile, insbesondere Schienenbügelunterteile, mittels welchen Führungsschienen der Aufzuganlage an der Schachtwand fixiert werden. Darüber hinaus kann Schachtmaterial auch als Befestigungsmaterial für Schachttüren, Beleuchtung oder Verkabelungen ausgeführt sein. Das Bauteil kann beispielsweise auch als ein Halter ausgeführt sein, mittels welchem Kabelkanäle oder Lüftungsrohre an einer Decke oder einer Wand eines Raums fixiert werden. Darüber hinaus ist eine Vielzahl anderer Ausgestaltungen des Bauteils denkbar.

Das Bauteil weist eine Anlagefläche auf, die in einem befestigten Zustand des Bauteils zumindest teilweise an einer Abstützfläche der Wand anliegt, so dass sich das Bauteil über die Abstützfläche an der Wand abstützt. Innerhalb oder am Rand der Anlagefläche ist die genannte Durchgangsöffnung angeordnet, durch welche im befestigten Zustand des Bauteils das im Bohrloch fixierte Befestigungsmittel hindurchragt. Das Bauteil wird also mittels des Befestigungsmittels gegen die Abstützfläche der Wand gedrückt und damit an der Wand befestigt. Dazu kann das Befestigungsmittel beispielsweise einen Kopf oder eine Mutter aufweisen, die eine Kraft auf das Bauteil in Richtung Wand ausüben können. Die Durchgangsöffnung und die Anlagefläche weisen eine feste räumliche Anordnung zueinander auf. Allerdings ist es möglich, dass die Durchgangsöffnung und das Befestigungsmittel so ausgeführt sind, dass das Befestigungsmittel an unterschiedlichen Positionen durch die Durchgangsöffnung hindurch ragen kann. Die Durchgangsöffnung ist dann insbesondere als ein so genanntes Langloch ausgeführt.

Unter einer Wand soll hier eine hauptsächlich plane bzw. ebene Fläche verstanden werden, an der ein Bauteil befestigt werden kann. Die Wand ist beispielsweise als eine Wand, eine Decke oder ein Boden eines Gebäudes ausgeführt. Insbesondere ist die Wand als eine Schachtwand eines Aufzugschachts einer Aufzuganlage ausgeführt. Es ist aber auch möglich, dass die Wand Teil einer Brücke oder eines sonstigen Bauwerks ausgeführt ist. Die Wand besteht insbesondere aus Beton, der insbesondere Armierungen enthält. Bei der Erstellung der Wand ist es meist das Ziel, eine vollkommen plane Wand zu erstellen. Dies kann aber meist nicht erreicht werden. Insbesondere bei der Erstellung einer Wand aus Beton, bei der flüssiger Beton in eine von Verschalungen gebildete Form gegossen wird, ergeben sich immer Abweichungen von einer vollkommen planen Wand, beispielsweise an Übergängen aneinander angrenzender Verschalungsteile. Derartige Abweichungen werden im Folgenden Unregelmässigkeiten genannt. Unregelmässigkeiten können beispielsweise als Erhebungen, beispielsweise in Form von Absätzen, oder Vertiefungen, beispielsweise in Form von Löchern ausgeführt sein.

Unter dem möglichen Wandbereich soll hier ein Bereich der Wand verstanden werden, an dem das Bauteil befestigt werden soll. Der mögliche Wandbereich kann sich beispielsweise aus einer Sollposition eines mit dem Bauteil an der Wand fixierten Elements ergeben. Wenn das Bauteil als ein Schienenbügelunterteil zur Fixierung einer Führungsschiene einer Aufzuganlage ausgeführt ist, ergibt sich der mögliche Wandbereich aus dem vorgegebenen Verlauf der Führungsschiene und der möglichen Positionierung der Führungsschiene gegenüber dem Schienenbügelunterteil. Daneben kann ein möglicher Arbeitsbereich einer das Verfahren ausführenden Montagevorrichtung Einfluss auf den möglichen Wandbereich haben. Unter einem möglichen Arbeitsbereich soll hier der Bereich verstanden werden, in dem die Montagevorrichtung Montageschritte ausführen kann. Insbesondere kann der mögliche Wandbereich in diesem Fall nur den Teil der Wand umfassen, der innerhalb des Arbeitsbereichs der Montagevorrichtung liegt.

Unter der Soll-Abstützfläche innerhalb des Wandbereichs soll hier ein Bereich des Wandbereichs der Wand verstanden werden, an dem die Anlagefläche des Bauteils im Idealfall an der Wand anliegt. Die Soll-Abstützfläche legt damit auch eine Soll-Position des Bauteils an der Wand fest. Der Soll-Abstützflächenbereich wird beispielsweise von einem Bediener vorgegeben oder ergibt sich aus vorhergehenden Arbeitsschritten der das Verfahren ausführenden Montagevorrichtung. Mit der Vorgabe des Soll-Abstützflächenbereichs ist auch ein Soll-Bohrpositionsbereich für das Bohrloch vorgegeben. Wenn die Durchgangsöffnung und das Befestigungsmittel so ausgeführt sind, dass das Befestigungsmittel an nur einer Position durch die Durchgangsöffnung hindurch ragen kann, besteht der Soll-Bohrpositionsbereich aus nur einer Soll-Bohrposition. Ist die Durchgangsöffnung beispielsweise als ein Langloch ausgeführt, so umfasst der Soll-Bohrpositionsbereich mehrere Bohrpositionen.

Das Bestimmen der Oberflächenkontur des Wandbereichs erfolgt beispielsweise mittels eines Scanners, der den Abstand zur Oberfläche oder genauer zu Wandpunkten der Wand messen kann und an verschiedenen Stellen gegenüber der Wand positioniert wird. Die jeweilige Position des Scanners ist dabei bekannt. Der Scanner wird beispielsweise in einem Zick-Zack-Muster entlang dem Wandbereich bewegt und misst dabei nach festen Wegstrecken den Abstand zu Wandpunkten der Oberfläche. Der Scanner kann beispielsweise auch so positioniert werden, dass die vermessenen Wandpunkte ein Raster mit festen Abständen bilden. Die vermessenen Wandpunkte haben beispielsweise einen Abstand zwischen 1 und 5 mm zueinander. Aus der Position und Ausrichtung des Scanners und dem gemessenen Abstand kann eine Position eines Wandpunkts auf der Oberfläche der Wand bestimmt werden. Aus den Positionen mehrerer Wandpunkte des Wandbereichs kann die Oberflächenkontur des Wandbereichs bestimmt werden. Die Bestimmung der Oberflächenkontur kann auch auf andere Weise, beispielsweise mittels einer digitalen Kamera, insbesondere einer Stereokamera erfolgen.

Insbesondere wird beim Bestimmen der Oberflächenkontur des Wandbereichs mit den ermittelten Positionen der Wandpunkte eine ideale Wandfläche bestimmt. Die ideale Wandfläche kann beispielsweise so bestimmt werden, dass die Summe der Quadrate der Abstände der Wandpunkte von der idealen Wandfläche minimal ist, also das Verfahren der kleinsten Fehlerquadrate verwendet wird. Es ist auch möglich, dass der so genannte RANSAC Algorithmus (englisch: "random sample consensus", deutsch etwa: "Übereinstimmung mit einer zufälligen Stichprobe") zur Bestimmung der idealen Wandfläche verwendet wird. Nach der Bestimmung der idealen Wandfläche werden die Abstände der einzelnen Wandpunkte von der idealen Wandfläche ermittelt. Diese Abstände dienen als Basis für die Erkennung von Unregelmässigkeiten in der Oberflächenkontur des Wandbereichs. Im Folgenden wird davon ausgegangen, dass sich die ideale Wandfläche in der ersten Richtung (x) und der zur ersten Richtung (x) senkrechten zweiten Richtung (z) erstreckt. Damit entsprechen die genannten Abstände der Wandpunkte von der idealen Wandfläche einer Position der Wandpunkte in einer dritten, zur ersten und zweiten Richtung senkrechten Richtung (y).

Nach dem Bestimmen der Oberflächenkontur des Wandbereichs wird diese überprüft und mittels einer ersten Erkennungsregel erste Unregelmässigkeiten in der Oberflächenkontur erkannt. Dabei kann beispielsweise eine erste Unregelmässigkeit bei einem Wandpunkt erkannt werden, wenn der Abstand des Wandpunkts zur idealen Wandfläche grösser als ein erster Schwellwert ist.

Anschliessend wird ein primärer möglicher Abstützflächenbereich und ein primärer möglicher Bohrpositionsbereich bestimmt. Die beiden Bereiche zeichnen sich dadurch aus, dass sie einerseits gross genug sind, um als Abstützfläche zu dienen bzw. das Bohrloch aufzunehmen und andererseits keine erste Unregelmässigkeit in der Oberflächenkontur aufweisen. Auf Basis dieser beiden Bedingungen können der primäre mögliche Abstützflächenbereich und der primär mögliche Bohrbereich auf einfache Weise bestimmt werden.

Nach der Bestimmung des primären möglichen Bohrbereichs wird die Oberflächenkontur des primären möglichen Bohrbereichs erneut überprüft und mittels einer zweiten Erkennungsregel zweite Unregelmässigkeiten erkannt. Dabei kann beispielsweise eine zweite Unregelmässigkeit bei einem Wandpunkt erkannt werden, wenn der Abstand des Wandpunkts zur idealen Wandfläche grösser als ein zweiter Schwellwert ist, der beispielsweise kleiner als der genannte erste Schwellwert ist. Bei der erneuten Prüfung der Oberflächenkontur kann auch auf Ergebnisse oder zumindest Zwischenergebnisse der ersten Prüfung der Oberflächenkontur zurückgegriffen werden. Es wird insbesondere nur die Oberflächenkontur des primären möglichen Bohrbereichs erneut überprüft und nicht der gesamte mögliche Wandbereich oder zusätzlich der primäre mögliche Abstützflächenbereich.

Nach der Erkennung der genannten zweiten Unregelmässigkeiten wird die Bohrposition für das Bohrloch innerhalb des primären möglichen Bohrpositionsbereichs so festgelegt, dass die Oberflächenkontur an der Bohrposition keine zweiten Unregelmässigkeiten aufweist. Mit der Festlegung der Bohrposition wird auch die Abstützfläche oder zumindest ein möglicher Bereich der Abstützfläche festgelegt. Damit werden die zweiten Unregelmässigkeiten der Oberflächenkontur nur bei der Festlegung der Bohrposition und nicht zusätzlich bei einer Festlegung einer Anlagefläche berücksichtigt, was eine sehr schnelle und effiziente Festlegung der Bohrposition ermöglicht.

Dem erfindungsgemässen Vorgehen liegt dabei der Gedanke zugrunde, dass mögliche Unregelmässigkeiten in der Oberflächenkontur für das Bohren eines Bohrlochs kritischer sind als Unregelmässigkeiten in der Abstützfläche für das Befestigen des Bauteils an der Wand. Anders ausgedrückt, dass für die Festlegung der Bohrposition eine genauere Prüfung auf Unregelmässigkeiten in der Oberflächenkontur notwendig ist, als bei der Festlegung der Abstützfläche. Diese genauere Prüfung auf Unregelmässigkeiten in der Oberflächenkontur für die Festlegung der Bohrposition führt dazu, dass das Bohren des Bohrlochs an der so bestimmten Bohrposition mit sehr hoher Wahrscheinlichkeit erfolgreich durchgeführt werden kann.

Zur Festlegung der Bohrposition innerhalb des primären möglichen Bohrpositionsbereichs kann beispielsweise folgendermassen vorgegangen werden. Dazu wird zunächst geprüft, ob der Soll-Bohrpositionsbereich für das Bohrloch innerhalb des primären möglichen Bohrpositionsbereichs liegt. Ist dies der Fall, so wird der Soll-Bohrpositionsbereich als ein Start-Bereich für einen Prüfbereich für die Prüfung auf zweite Unregelmässigkeiten in der Oberflächenkontur übernommen. Liegt der Soll-Bohrpositionsbereich nicht innerhalb des primären möglichen Bohrpositionsbereichs, so ergibt sich der genannte Start-Bereich für die Prüfung auf zweite Unregelmässigkeiten in der Oberflächenkontur durch Verschieben des Soll-Bohrpositionsbereichs in einer so genannten Haupt-Verschieberichtung, welche insbesondere entweder in der genannten ersten Richtung (x) oder zweiten Richtung (z) verläuft. Wenn das zu befestigende Bauteil als ein Schienenbügelunterteil zur Fixierung einer Führungsschiene in einem Aufzugschacht ausgeführt ist, dann ist die Haupt-Verschieberichtung insbesondere vertikal, hier in Richtung der zweiten Richtung (z) ausgerichtet. Dies ergibt sich aus der Tatsache, dass die Position eines Schienenbügelunterteils in vertikaler Richtung unkritischer ist als in horizontaler Richtung, hier der ersten Richtung (x). Wenn der genannte Prüfbereich für die Prüfung auf zweite Unregelmässigkeiten in der Oberflächenkontur bestimmt ist, wird geprüft, ob darin eine mögliche Bohrposition gefunden werden kann, welche keine zweiten Unregelmässigkeiten aufweist. Wird eine solche mögliche Bohrposition gefunden, wird diese als Bohrposition für das Bohrloch übernommen. Kann keine derartige mögliche Bohrposition gefunden werden, wird der genannte Prüfbereich um eine festgelegte Strecke von beispielsweise 2 bis 5 mm in Haupt-Verschieberichtung verschoben. Anschliessend wird wieder geprüft, ob innerhalb des Prüfbereichs eine mögliche Bohrposition gefunden werden kann, welche keine zweiten Unregelmässigkeiten aufweist. Das Verschieben und Prüfen wird insbesondere so lange wiederholt, bis eine mögliche Bohrposition gefunden wird.

Es ist möglich, dass das an der Wand zu befestigende Bauteil zwei Durchgangslöcher aufweist, so dass für die Befestigung des Bauteils an der Wand zwei Bohrlöcher in einer definierten Lage zueinander gebohrt werden müssen. In diesem Fall müssen zwei Bohrpositionen bestimmt werden, die eine definierte Lage zueinander aufweisen. Das erfindungsgemässe Verfahren ist dabei analog anwendbar, wobei zusätzlich geprüft werden muss, dass die mit dem Verfahren bestimmten Bohrlöcher auch die vorgegebene Lage zueinander aufweisen.

In Ausgestaltung der Erfindung wird der primäre mögliche Abstützflächenbereich so bestimmt, dass ein Abstand zwischen Soll-Abstützfläche und primärem möglichen Abstützflächenbereich möglichst gering ist. Damit wird erreicht, dass die Bohrposition so bestimmt wird, dass das Bauteil möglichst nahe seiner Soll-Position an der Wand befestigt werden kann.

In Ausgestaltung der Erfindung umfasst die erste Erkennungsregel zum Erkennen von ersten Unregelmässigkeiten in der Oberflächenkontur folgende Schritte:
- Bestimmen von Wandpunkten, welche einen Abstand zur idealen Wandfläche aufweisen, der grösser als ein erster Schwellwert ist,
- Zusammenfassen von benachbarten Wandpunkten, welche die genannte Bedingung erfüllen, und
- Erkennen einer ersten Unregelmässigkeit, wenn ein Flächeninhalt der zusammengefassten Wandpunkte grösser als ein Grenz-Flächeninhalt ist.

Der erste Schwellwert beträgt beispielsweise zwischen 5 und 10 mm und der Grenz-Flächeninhalt beispielsweise zwischen 15 und 30 cm². Beim genannten Zusammenfassen der Wandpunkte werden beispielsweise die Wandpunkte zusammengefasst, welche die genannte Bedingung erfüllen und ausserdem einen Abstand zu einem anderen, die genannte Bedingung erfüllenden Wandpunkt aufweisen, der kleiner als ein Grenz-Abstand von beispielsweise 5 bis 50 mm aufweisen. Zusätzlich kann beim Zusammenfassen ein Rechteck definiert werden, das alle genannten Wandpunkt beinhaltet und dessen Kanten in die genannte erste Richtung (x) bzw. die genannte zweite Richtung (z) verlaufen. Dies ermöglicht eine besonders einfache Bestimmung des Flächeninhalts der zusammengefassten Wandpunkte.

Das beschriebene Vorgehen zum Erkennen von ersten Unregelmässigkeiten ermöglicht eine sehr schnelle Bestimmung des primären möglichen Abstützflächenbereichs und des primären möglichen Bohrpositionsbereichs für das Bohrloch.

In Ausgestaltung der Erfindung weist der primäre mögliche Abstützflächenbereich eine Form eines Rechtecks auf, wobei Kanten des genannten Rechtecks in die erste Richtung (x) bzw. die zweite Richtung (z) verlaufen und sich das genannte Rechteck in der ersten Richtung (x) über den gesamten möglichen Wandbereich erstreckt. Dies führt dazu, dass eine erste Unregelmässigkeit an einer bestimmten Position in der zweiten Richtung (z) und einer beliebigen Position in der ersten Richtung (x) zu einem Ausschluss aller Positionen in der ersten Richtung (x) und der genannten Position in der zweiten Richtung (z) führt. Dies ermöglicht eine besonders schnelle Bestimmung des primären möglichen Abstützflächenbereichs und des primären möglichen Bohrpositionsbereichs für das Bohrloch.

Die oben genannte Haupt-Verschieberichtung verläuft dabei insbesondere wie oben beschrieben in der zweiten Richtung (z), insbesondere der vertikalen Richtung.

In Ausgestaltung der Erfindung umfasst die zweite Erkennungsregel zum Erkennen von zweiten Unregelmässigkeiten in der Oberflächenkontur folgende Schritte:
- Bestimmen von Wandpunkten, welche einen Abstand zur idealen Wandfläche aufweisen, der grösser als ein zweiter Schwellwert ist,
- Erkennen einer zweiten Unregelmässigkeit bei jedem Wandpunkt, welcher die genannte Bedingung erfüllt.

Das beschriebene Erkennen einer zweiten Unregelmässigkeit bei jedem die genannte Bedingung erfüllenden Wandpunkt ermöglicht eine sehr genaue Bestimmung der zweiten Unregelmässigkeiten und ermöglicht damit eine besonders sichere Ermittlung einer geeigneten Bohrposition.

Der zweite Schwellwert kann dabei gleich wie der genannte erste Schwellwert sein oder sich von diesem unterscheiden. Der zweite Schwellwert kann insbesondere kleiner als der erste Schwellwert sein und beispielsweise zwischen 3 und 5 mm betragen.

In Ausgestaltung der Erfindung werden zwischen der Bestimmung des primären möglichen Bohrpositionsbereichs und der Bohrposition des Bohrlochs mittels einer dritten Erkennungsregel dritte Unregelmässigkeiten in der Oberflächenkontur des primären möglichen Bohrpositionsbereichs erkannt. Die dritte Erkennungsregel umfasst folgende Schritte:
- Bestimmen von Wandpunkten, welche einen Abstand zur idealen Wandfläche aufweisen, der grösser als ein dritter Schwellwert ist und
- Zusammenfassen von benachbarten Wandpunkten, welche die genannte Bedingung erfüllen,
und ein sekundärer möglicher Bohrbereich für das Bohrloch in Abhängigkeit der dritten Unregelmässigkeiten in der Oberflächenkontur bestimmt wird.

Damit kann sehr schnell ein sekundärer möglicher Bohrbereich für das Bohrloch bestimmt werden, ausgehend von dem wie oben beschrieben in Abhängigkeit der zweiten Unregelmässigkeiten die Bohrposition festlegelegt werden. Dieses zweistufige Vorgehen ermöglicht eine besonders effektive Bestimmung der Bohrposition.

Der dritte Schwellwert kann dabei gleich wie der genannte erste Schwellwert oder der genannte zweite Schwellwert sein oder sich von diesen unterscheiden. Der dritte Schwellwert kann beispielsweise zwischen 3 und 10 mm betragen.

Zusätzlich kann beim Zusammenfassen der die dritte Bedingung erfüllenden Wandpunkte ein Rechteck definiert werden, das alle genannten Wandpunkte beinhaltet und dessen Kanten in die genannte erste Richtung (x) bzw. die genannte zweite Richtung (z) verlaufen. Dies ermöglicht eine besonders einfache Berücksichtigung der zusammengefassten Wandpunkte.

Es wird insbesondere nur die Oberflächenkontur des primären möglichen Bohrbereichs erneut überprüft und nicht der gesamte mögliche Wandbereich oder zusätzlich der primäre mögliche Abstützflächenbereich.

Es ist auch möglich, dass nach Bestimmung der idealen Wandfläche die ersten, zweiten und dritten Unregelmässigkeiten für den gesamten möglichen Wandbereich in einem gemeinsamen Arbeitsschritt bestimmt werden.

Der sekundäre mögliche Bohrbereich für das Bohrloch wird insbesondere so in Abhängigkeit der dritten Unregelmässigkeiten bestimmt, dass ein Grad einer Überlappung der Durchgangsöffnung des Bauteils mit den dritten Unregelmässigkeiten in der Oberflächenkontur kleiner als ein erster Grenzwert ist. Der erste Grenzwert kann beispielsweise zwischen 10 und 30 % bezogen auf die Durchgangsöffnung betragen. Dieses Vorgehen ist insbesondere dann geeignet, wenn die Durchgangsöffnung als ein Langloch ausgeführt ist.

In Ausgestaltung der Erfindung wird zur Bestimmung des sekundären möglichen Bohrbereichs für das Bohrloch nur eine Verschiebung in einer Haupt-Verschieberichtung durchgeführt, welche bereits oben beschrieben ist. Das ermöglicht eine besonders einfache Bestimmung des sekundären möglichen Bohrbereichs für das Bohrloch.

In Ausgestaltung der Erfindung wird ein Verlauf von Armierungen in der Wand im primären möglichen Bohrpositionsbereich für das Bohrloch bestimmt und bei der Bestimmung der Bohrposition des Bohrlochs berücksichtigt. Unter einer Armierung ist hier eine einzelne Verstärkung innerhalb der Wand zu verstehen, die auf Basis der Oberflächenstruktur der Wand nicht erkannt werden kann. Eine Armierung besteht meist aus einer Stange aus Eisen oder Stahl, die zusammen mit weiteren Armierungen als ein Gitter angeordnet ist. Ein Bohrloch sollte möglichst nicht durch eine Armierung verlaufen, da die Armierung einen die Bohrung ausführenden Bohrer beschädigen kann und der Bohrvorgang ausserdem sehr lange dauern kann. Die Bestimmung und Berücksichtigung des Verlaufs der Armierungen ermöglicht damit eine schnelle und kostengünstige Durchführung des nachfolgenden Bohrvorgangs. Die Erkennung und Berücksichtigung der Armierungen kann beispielsweise wie in der WO 2017/016782 A1 beschrieben erfolgen.

In Ausgestaltung der Erfindung wird der genannte Verlauf der Armierungen in der Wand nur zusammen mit den zweiten Unregelmässigkeiten in der Oberflächenkontur und/oder den dritten Unregelmässigkeiten in der Oberflächenkontur berücksichtigt. Der genannte Verlauf der Armierungen wird damit zusammen mit den ersten Unregelmässigkeiten nicht berücksichtigt. Dieses Vorgehen ermöglicht, dass die Prüfung auf erste Unregelmässigkeiten in der Oberflächenkontur sehr schnell ausgeführt werden kann. Dies ermöglicht eine besonders schnelle Bestimmung der Bohrposition.

Bei der Berücksichtigung des Verlaufs der Armierungen zusammen mit den dritten Unregelmässigkeiten werden insbesondere nur Armierungen berücksichtigt, die quer zur oben genannten Haupt-Verschieberichtung, also insbesondere hauptsächlich horizontal verlaufen. Dies ermöglicht eine schnelle Berücksichtigung des Verlaufs der Armierungen. Bei der Berücksichtigung des Verlaufs der Armierungen zusammen mit den zweiten Unregelmässigkeiten werden insbesondere alle Armierungen berücksichtigt. Dies eine genaue Berücksichtigung des Verlaufs der Armierungen.

Die Bohrposition des Bohrlochs wird insbesondere so bestimmt, dass ein Abstand der Bohrposition zu einer Armierung möglichst gross ist. Damit ist die Wahrscheinlichkeit, dass die nachfolgende Bohrung ohne Beeinträchtigung durch eine Armierung durchgeführt werden kann, besonders hoch. Falls keine Bohrposition gefunden werden kann, ohne dass mit einer Beeinträchtigung durch eine Armierung zu rechnen ist, kann auch eine Beeinträchtigung durch eine Armierung in Kauf genommen werden. Dies kann insbesondere erst dann erfolgen, wenn ein Bediener einer das Verfahren durchführenden Montagevorrichtung eine entsprechende Meldung erhalten hat, und er das Vorgehen beispielsweise über eine entsprechende Eingabe an einer Bedienerschnittstelle genehmigt hat.

In Ausgestaltung der Erfindung wird in dem Fall, in dem keine Bohrposition des ersten Bohrlochs innerhalb des möglichen Wandbereichs gefunden wurde, ein neuer möglicher Wandbereich vorgegeben. Damit wird ermöglicht, dass eine passende Bohrposition an der Wand bestimmt werden kann. Der neue mögliche Wandbereich ergibt sich insbesondere durch eine Verschiebung des ursprünglichen möglichen Wandbereichs in der oben genannten Haupt-Verschieberichtung. Die Verschiebung erfolgt insbesondere so, dass ein primär möglicher Abstützflächenbereich und ein primär möglicher Bohrpositionsbereich, welche an einem in Haupt-Verschieberichtung liegenden Rand des ursprünglichen möglichen Wandbereichs angeordnet sind, auch im neuen möglichen Randbereich enthalten sind. Die Verschiebung erfolgt insbesondere so, dass der genannte Überlappungsbereich zwischen ursprünglichem und neuen möglichen Wandbereich möglichst gross ist. Damit ergibt sich auch die Richtung der Verschiebung, also beispielsweise vertikal nach oben oder unten.

Wenn das Verfahren von einer Montagevorrichtung zur Durchführung von automatisierten Montageschritten ausgeführt wird, wird diese zur Vorgabe des neuen möglichen Wandbereichs die Montagevorrichtung verlagert. Durch die Verlagerung der Montagevorrichtung ergibt sich ein neuer Arbeitsbereich der Montagevorrichtung, was einen neuen möglichen Wandbereich ermöglicht.

Die oben genannte Aufgabe wird auch von einer Montagevorrichtung zur automatisierten Bestimmung einer Bohrposition eines Bohrlochs für ein Befestigungsmittel zum Befestigen eines Bauteils an einem möglichen Wandbereich einer Wand gelöst. Das Bauteil weist eine Anlagefläche und eine Durchgangsöffnung auf, wobei in einem befestigten Zustand des Bauteils an der Wand zumindest ein Teil der Anlagefläche an einer Abstützfläche der Wand anliegt und das im Bohrloch fixierte Befestigungsmittel durch die Durchgangsöffnung hindurch ragt. Der genannte mögliche Wandbereich, an dem das Bauteil befestigt werden soll, ist hauptsächlich plan und erstreckt sich in einer ersten Richtung (x) und einer zur ersten Richtung (x) senkrechten zweiten Richtung (z). Eine Soll-Abstützfläche innerhalb des Wandbereichs, an dem die Anlagefläche des Bauteils im montierten Zustand zumindest teilweise anliegt, und damit ein Soll-Bohrpositionsbereich für das Bohrloch sind vorgegeben. Die Montagevorrichtung weist eine Steuerungseinrichtung auf, die dazu vorgesehen ist, folgende Schritte auszuführen:
- Bestimmen einer Oberflächenkontur des Wandbereichs,
- Überprüfen der Oberflächenkontur des Wandbereichs und Erkennen von ersten Unregelmässigkeiten in der Oberflächenkontur mittels einer ersten Erkennungsregel,
- Bestimmen eines primären möglichen Abstützflächenbereichs und eines primären möglichen Bohrpositionsbereichs für das Bohrloch, welche keine ersten Unregelmässigkeiten der Oberflächenkontur aufweisen,
- Überprüfen der Oberflächenkontur des primären möglichen Bohrpositionsbereichs für das Bohrloch und Erkennen von zweiten Unregelmässigkeiten in der Oberflächenkontur mittels einer zweiten Erkennungsregel und
- Bestimmen der Bohrposition für das Bohrloch innerhalb des primären möglichen Bohrpositionsbereichs in der Art, dass die Oberflächenkontur an der Bohrposition keine zweiten Unregelmässigkeiten aufweist.

Es wird darauf hingewiesen, dass einige der möglichen Merkmale und Vorteile der Erfindung hierin mit Bezug auf unterschiedliche Ausführungsformen des erfindungsgemässen Verfahren einerseits und der der erfindungsgemässen Montagevorrichtung andererseits beschrieben sind. Ein Fachmann erkennt, dass die Merkmale in geeigneter Weise kombiniert, angepasst, übertragen oder ausgetauscht werden können, um zu weiteren Ausführungsformen der Erfindung zu gelangen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: eine perspektivische Ansicht eines Aufzugschachts einer Aufzuganlage mit einer darin aufgenommenen Montagevorrichtung,
- Fig. 2: eine perspektivische Ansicht einer Montagevorrichtung,
- Fig. 3: ein Bauteil in Form eines Schienenbügelunterteils in einer Sicht von vorne,
- Fig. 4: das Schienenbügelunterteil aus Fig. 3 in einer Sicht von der Seite,
- Fig. 5: einen möglichen Wandbereich mit einer Soll-Abstützfläche und zwei Soll-Bohrpositionsbereichen,
- Fig. 6: ein möglicher Wandbereich in einer vergrösserten Darstellung und ein
- Fig. 7: Ausschnitt eines möglichen Wandbereichs in einer vergrösserten Darstellung.

Im Folgenden wird ein Verfahren und eine Montagevorrichtung zur automatisierten Bestimmung einer Bohrposition eines Bohrlochs im Zusammenhang mit der Montage einer Aufzuganlage in einem Aufzugschacht beschrieben. Die Anwendung eines derartigen Verfahrens und einer derartigen Montagevorrichtung ist aber nicht auf den beschriebenen Anwendungsfall beschränkt, sondern kann auch zu anderen Zwecken verwendet werden. Dazu sind eventuell Anpassungen am Verfahren und der Montagevorrichtung notwendig, die der Fachmann mit seinem Fachwissen und der übrigen Beschreibung problemlos durchführen kann.

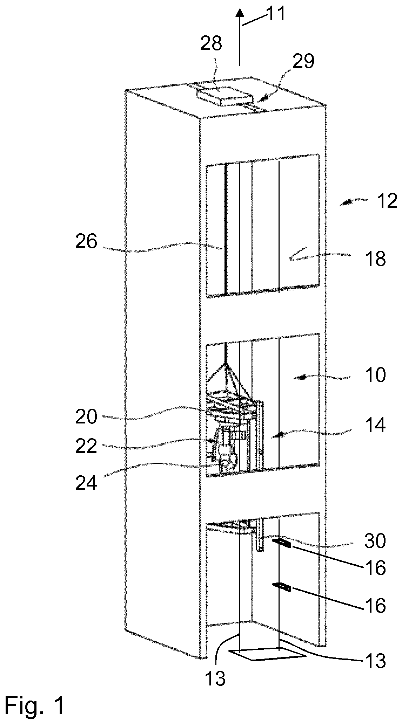

In Fig. 1 ist eine in einem Aufzugschacht 10 einer Aufzuganlage 12 angeordnete Montagevorrichtung 14 dargestellt, mittels welcher Schienenbügelunterteile 16 an einer Schachtwand 18 fixiert werden können. Der Aufzugschacht 10 erstreckt sich in einer Haupterstreckungsrichtung 11, die in der Fig. 1 vertikal ausgerichtet ist. Über die Schienenbügelunterteile 16 können in einem späteren Montageschritt nicht dargestellte Führungsschienen der Aufzuganlage 12 an der Schachtwand 18 fixiert werden. Die Montagevorrichtung 14 weist eine Trägerkomponente 20 und eine mechatronische Installationskomponente 22 auf. Die Trägerkomponente 20 ist als Gestell ausgeführt, an dem die mechatronische Installationskomponente 22 montiert ist. Dieses Gestell weist Abmessungen auf, die ermöglichen, die Trägerkomponente 20 innerhalb des Aufzugschachts 10 vertikal zu verlagern, das heisst beispielsweise zu unterschiedlichen vertikalen Positionen an verschiedenen Stockwerken innerhalb eines Gebäudes zu verfahren. Die mechatronische Installationskomponente 22 ist im dargestellten Beispiel als Industrieroboter 24 ausgeführt, der nach unten hängend an dem Gestell der Trägerkomponente 20 angebracht ist. Ein Arm des Industrieroboters 24 kann dabei relativ zu der Trägerkomponente 20 bewegt werden und beispielsweise hin zur Schachtwand 18 des Aufzugschachts 10 verlagert werden.

Die Trägerkomponente 20 ist über ein als Tragmittel 26 dienendes Stahlseil mit einer Verlagerungskomponente 28 in Form einer motorisch angetriebenen Seilwinde verbunden, welche oben an dem Aufzugschacht 10 an einer Haltestelle 29 an der Decke des Aufzugschachts 10 angebracht ist. Mithilfe der Verlagerungskomponente 28 kann die Montagevorrichtung 14 innerhalb des Aufzugschachts 10 in Haupterstreckungsrichtung 11 des Aufzugschachts 10, also vertikal über eine gesamte Länge des Aufzugschachts 10 hin verlagert werden.

Die Montagevorrichtung 14 weist ferner eine Fixierkomponente 30 auf, mithilfe derer die Trägerkomponente 20 innerhalb des Aufzugschachts 10 in seitlicher Richtung, das heisst in horizontaler Richtung, fixiert werden kann.

Im Aufzugschacht 10 sind über dessen gesamte Länge zwei Referenzelemente 13 in Form von Schnüren gespannt, die entlang der Haupterstreckungsrichtung 11 ausgerichtet sind. Die Referenzelemente 13 werden von einem Monteur im Aufzugschacht 10 angebracht und bilden die Referenz für die Ausrichtung und Montage von Führungsschienen der Aufzuganlage 12. Die Führungsschienen müssen damit in montiertem Zustand parallel zu den Referenzelementen 13 und in einem bestimmten Abstand zu den Referenzelementen 13 verlaufen. Aus dem Verlauf der Referenzelemente 13 kann der Verlauf der Führungsschienen und damit auf die Soll-Position der Schienenbügelunterteile 16 an der Schachtwand 18 geschlossen werden.

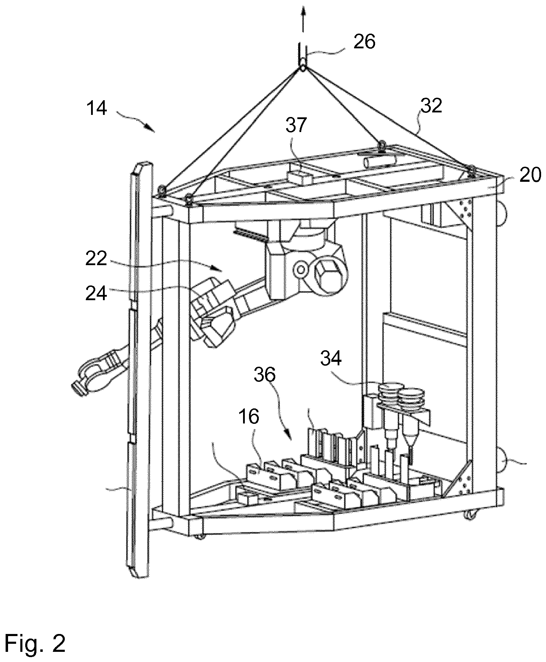

Fig. 2 zeigt eine vergrößerte Ansicht einer Montagevorrichtung 14.

Die Trägerkomponente 20 ist als käfigartiges Gestell ausgebildet, bei dem mehrere horizontal und vertikal verlaufende Holme eine mechanisch belastbare Struktur bilden.

Oben an der käfigartigen Trägerkomponente 20 sind Halteseile 32 angebracht, welche mit dem Tragmittel 26 verbunden werden können. Ausserdem ist oben an der Trägerkomponente 20 eine Steuerungseinrichtung 37 zur Ansteuerung der Montagevorrichtung 14 angeordnet.

In der dargestellten Ausführungsform ist die mechatronische Installationskomponente 22 mithilfe eines Industrieroboters 24 ausgeführt. In dem dargestellten Beispiel ist der Industrieroboter 24 mit mehreren um Schwenkachsen verschwenkbaren Roboterarmen ausgestattet. Beispielsweise kann der Industrieroboter mindestens sechs Freiheitsgrade aufweisen, das heisst, ein von dem Industrieroboter 24 geführtes Montagewerkzeug 34 kann mit sechs Freiheitsgraden bewegt werden, das heisst beispielsweise mit drei Rotationsfreiheitsgraden und drei Translationsfreiheitsgraden. Beispielsweise kann der Industrieroboter als Vertikal-Knickarmroboter, als Horizontal-Knickarmroboter oder als SCARA-Roboter oder als kartesischer Roboter bzw. Portalroboter ausgeführt sein.

Der Roboter kann an seinem freitragenden Ende mit verschiedenen Montagewerkzeugen 34 gekoppelt werden. Die Montagewerkzeuge 34 können sich hinsichtlich ihrer Auslegung und ihres Einsatzzweckes unterscheiden. Die Montagewerkzeuge 34 können an der Trägerkomponente 20 derart gehalten werden, dass das freitragende Ende des Industrieroboters 24 an sie herangefahren werden und mit einem von ihnen gekoppelt werden kann. Der Industrieroboter 24 kann hierzu beispielsweise über ein Werkzeugwechselsystem verfügen, das so ausgebildet ist, dass es mindestens die Handhabung mehrerer solcher Montagewerkzeuge 34 ermöglicht.

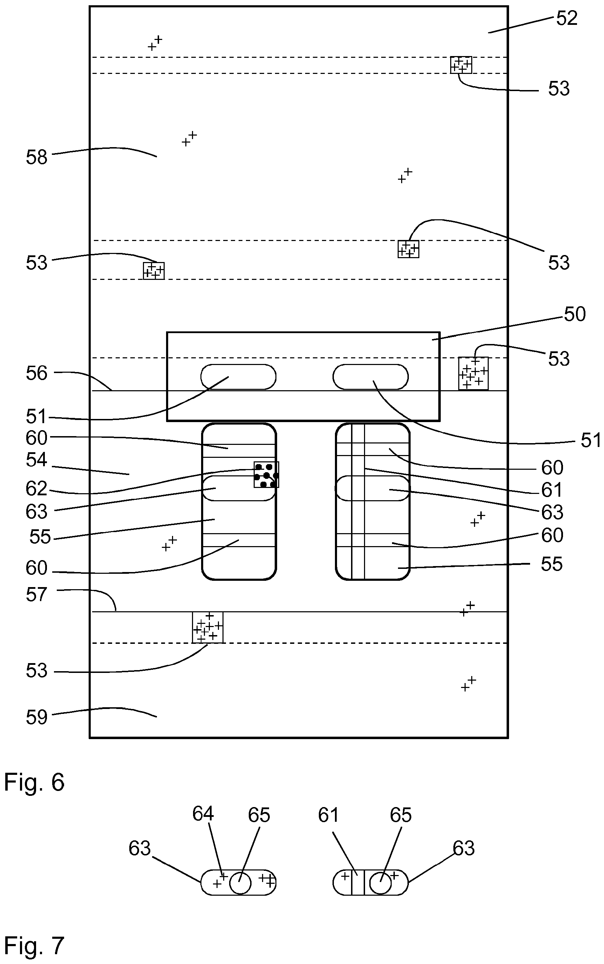

Eines der Montagewerkzeuge 34 ist als Sensor, beispielsweise als Laserscanner ausgeführt, mittels welchem die relative Lage der Trägerkomponente 20 gegenüber den Referenzelementen 13 bestimmt werden kann. Dies kann beispielsweise mit einem Verfahren durchgeführt werden, das in der WO 2017/167719 A1 beschrieben ist. Aus der relativen Lage der Trägerkomponente 20 gegenüber den Referenzelementen 13 kann die Position der Trägerkomponente 20 im Aufzugschacht 10 ermittelt werden. Ausgehend von der Position der Trägerkomponente 20 kann bestimmt werden, an welchen Stellen der Schachtwand 18 ein Schienenbügelunterteil 16 befestigt werden soll. Damit kann die Soll-Position eines Schienenbügelunterteils 16 an der Schachtwand 18 bestimmt werden. Mit dem Laserscanner kann auch ein Abstand des Laserscanners zu einem Wandpunkt der Schachtwand 18 gemessen werden. Mit Kenntnis der Position des Laserscanners kann damit die Position des Wandpunkts bestimmt werden. Durch das Bestimmen der Positionen einer Vielzahl von Wandpunkten kann eine Oberflächenkontur eines Wandbereichs der Schachtwand 18 bestimmt werden. Auf die Auswertung der so ermittelten Oberflächenstruktur wird in Zusammenhang mit den Fig. 6 und 7 eingegangen.

Eines der Montagewerkzeuge 34 ist als eine Armierungsdetektionskomponente ausgeführt. Die Armierungsdetektionskomponente ist dazu ausgelegt, eine Armierung innerhalb der Schachtwand 18 zu detektieren. Hierzu kann sich die Armierungsdetektionskomponente beispielsweise physikalischer Messmethoden bedienen, bei denen elektrische und/oder magnetische Eigenschaften der typischerweise metallischen Armierung innerhalb einer Betonwand genutzt werden, um diese Armierung positionsgenau zu erkennen.

Eines der Montagewerkzeuge 34 ist als Bohrwerkzeug, ähnlich einer Schlagbohrmaschine, ausgestaltet. Durch Kopplung des Industrieroboters 24 mit einem solchen Bohrwerkzeug kann die Installationskomponente 22 dazu ausgestaltet werden, ein zumindest teilweise automatisiert gesteuertes Bohren von Bohrlöchern in einer der Schachtwände 18 des Aufzugschachts 10 zu ermöglichen. Das Bohrwerkzeug kann hierbei von dem Industrieroboter 24 derart bewegt und gehandhabt werden, dass das Bohrwerkzeug mit einem Bohrer an einer vorgesehenen Bohrposition Löcher in die Schachtwand 18 des Aufzugschachts 10 bohrt, in die später Befestigungsmittel in Form Ankerbolzen zur Fixierung von Schienenbügelunterteilen eingeschlagen werden.

Ein weiteres Montagewerkzeug 34 ist als Einschlagwerkzeug ausgestaltet, um zumindest teilautomatisch Ankerbolzen in zuvor gebohrte Bohrlöcher in die Schachtwand 18 des Aufzugschachts 10 einzuschlagen.

Ein weiteres Montagewerkzeug 34 ist als ein Greifer ausgestaltet, um zumindest teilautomatisch ein Schienenbügelunterteil 16 an der Schachtwand 18 zu befestigen.

An der Trägerkomponente 20 kann ferner eine Magazinkomponente 36 vorgesehen sein. Die Magazinkomponente 36 kann dazu dienen, zu installierende Schienenbügelunterteile 16 zu lagern und der Installationskomponente 22 bereitzustellen. In der Magazinkomponente 36 können auch Ankerbolzen gelagert und bereitgestellt werden, die mithilfe der Installationskomponente 22 in vorgefertigte Bohrlöcher in der Schachtwand 18 eingeschlagen werden können.

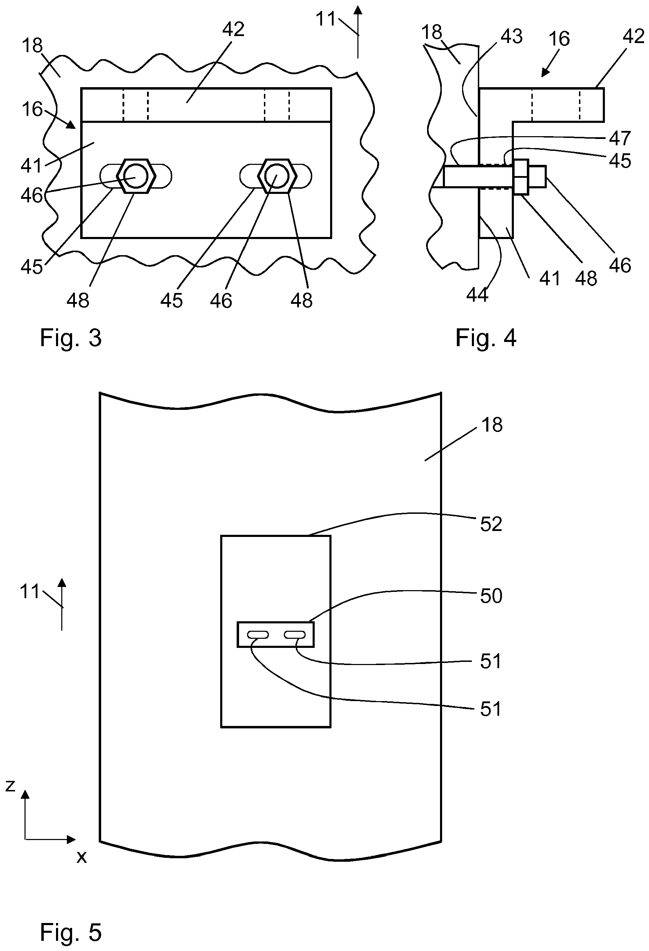

Gemäss den Fig. 3 und 4 weist ein als Schienenbügelunterteil 16 ausgeführtes Bauteil, das an der Schachtwand 18 befestigt ist, einen im befestigten Zustand in Haupterstreckungsrichtung 11 und damit vertikal verlaufenden ersten Teil 41 und einen senkrecht dazu angeordneten, im befestigten Zustand senkrecht von der Schachtwand 18 weg und damit horizontal verlaufenden zweiten Teil 42 auf. Der erste Teil 41 bildet eine Anlagefläche 43 aus, die an einer korrespondierenden Abstützfläche 44 der Schachtwand 18 anliegt und damit in ihr abstützt. Der erste Teil 41 weist zwei Durchgangsöffnungen 45 auf, durch die jeweils ein Befestigungsmittel in Form eines Ankerbolzens 46 hindurchragt. Die Ankerbolzen 46 sind in jeweils ein Bohrloch 47 in der Schachtwand 18 eingeschlagen. Das Schienenbügelunterteil 16 wird mittels zweier auf die Ankerbolzen 46 aufgeschraubten Muttern 48 gegen die Abstützfläche 44 der Schachtwand 18 gedrückt und damit gehalten. Die Durchgangsöffnungen 45 sind als Langlöcher ausgeführt, die quer zur Haupterstreckungsrichtung 11 und damit horizontal ausgerichtet sind. Solange die Muttern 48 noch nicht fest angezogen sind, kann das Schienenbügelunterteil 16 damit in einem gewissen Rahmen in horizontaler Richtung gegenüber den Ankerbolzen 46 verschoben werden. Über den zweiten Teil 42 des Schienenbügelunterteils 16 kann ein nicht dargestelltes Schienenbügeloberteil am Schienenbügelunterteil 16 und damit an der Schachtwand 18 fixiert werden. Am Schienenbügeloberteil wird eine Führungsschiene befestigt, die damit ebenfalls an der Schachtwand 18 fixiert wird.

Im Folgenden wird anhand der Fig. 5, 6 und 7 beschrieben, wie die Bohrpositionen für die Bohrlöcher 47 ermittelt werden. Wie oben beschrieben, bestimmt die Steuerungseinrichtung 37 eine Soll-Position des Schienenbügelunterteils 16. Daraus ergibt sich eine Soll-Abstützfläche 50 an der Schachtwand 18, an der die Anlagefläche 43 des Schienenbügelunterteils 16 an der Schachtwand 18 anliegen soll. Damit ergeben sich auch Soll-Bohrpositionsbereiche 51 für die Bohrlöcher 47. Da die Durchgangsöffnungen 45 des Schienenbügelunterteils 16 wie beschrieben als Langlöcher ausgeführt sind, kann die Abstützfläche ausgehend von der Soll-Abstützfläche 50 in horizontaler und damit in einer ersten Richtung (x) um ein bestimmtes Stück in beide Richtungen verschoben werden. Ausserdem kann die Abstützfläche ausgehend von der Soll-Abstützfläche 50 in vertikaler Richtung und damit in Haupterstreckungsrichtung 11 und somit in einer zweiten Richtung (z) verschoben werden. Das Ausmass der Verschiebung wird begrenzt vom möglichen Arbeitsbereich der Montagevorrichtung 14 an ihrer aktuellen Position, also davon in welchem Bereich der Schachtwand 18 die Montagevorrichtung 14 automatisiert Montageschritte ausführen kann. Damit ergibt sich ein möglicher Wandbereich 52 der Schachtwand 18, an dem die Abstützfläche 44 und damit die Bohrpositionen der Bohrlöcher 47 angeordnet sein können. Der mögliche Wandbereich 52 ist wie die restliche Schachtwand 18 hauptsächlich plan und erstreckt sich in die genannte erste Richtung (x) und die zur ersten Richtung (x) senkrechten, zweiten Richtung (z).

Zur Bestimmung der Bohrpositionen der Bohrlöcher 47 werden wie oben beschrieben mittels eines Laserscanners 34 die Positionen von einzelnen Wandpunkten innerhalb des möglichen Wandbereichs 52 und damit die Oberflächenstruktur des Wandbereichs 52 bestimmt. Die einzelnen Wandpunkte haben beispielsweise einen Abstand von 1 bis 4 mm zueinander. Mit dem so genannten RANSAC Algorithmus wird ausgehend von den Positionen der einzelnen Wandpunkte eine ideale Wandfläche bestimmt. Im vorliegenden Beispiel wird davon ausgegangen, dass sich die ideale Wandfläche in der ersten Richtung (x) und der zur ersten Richtung (x) senkrechten zweiten Richtung (z) erstreckt. Damit entsprechen Abstände der einzelnen Wandpunkte von der idealen Wandfläche einer Position der Wandpunkte in einer dritten, zur ersten und zweiten Richtung senkrechten Richtung.

Anschliessend wird die Oberflächenkontur des Wandbereichs 52 mit einer ersten Erkennungsregel überprüft, um erste Unregelmässigkeiten zu erkennen. Dazu werden die Wandpunkte bestimmt, deren Abstand zur idealen Wandfläche grösser als ein erster Schwellwert von 10 mm ist. Anschliessend werden benachbarte Wandpunkte, die die genannte Bedingung erfüllen, zusammengefasst. Beim Zusammenfassen der Wandpunkte werden die Wandpunkte zusammengefasst, welche die genannte Bedingung erfüllen und ausserdem einen Abstand zu einem anderen, die genannte Bedingung erfüllenden Wandpunkt aufweisen, der kleiner als ein Grenz-Abstand von 10 mm ist. Zusätzlich wird beim Zusammenfassen ein Rechteck definiert, das alle genannten Wandpunkte beinhaltet und dessen Kanten in die genannte erste Richtung (x) bzw. die genannte zweite Richtung (z) verlaufen. Eine erste Unregelmässigkeit wird erkannt, wenn ein Flächeninhalt der zusammengefassten Wandpunkte, also des genannten Rechtecks, grösser als ein Grenz-Flächeninhalt von 20 cm² ist.

In Fig. 6 ist das Ergebnis der Anwendung der ersten Erkennungsregel dargestellt. Wandpunkte, deren Abstand zur idealen Wandfläche grösser als der erste Schwellwert ist, sind mit einem Kreuz gekennzeichnet. Sobald ein benachbarte Wandpunkte umschliessendes Rechteck einen Flächeninhalt grösser als der genannte Grenz-Flächeninhalt ist, ist das Rechteck ebenfalls dargestellt. Im in Fig. 6 dargestellten Beispiel weist die mögliche Wandfläche damit insgesamt fünf erste Unregelmässigkeiten 53 auf.

Anschliessend wird ein primärer möglicher Abstützflächenbereich 54 und zwei primäre mögliche Bohrpositionsbereiche 55 bestimmt. Der primär mögliche Abstützflächenbereich 54 weist eine rechteckige Form auf und erstreckt sich in der ersten Richtung (x) über den gesamten möglichen Wandbereich 52. In der zweiten Richtung (z) wird er nach oben von einer ersten Linie 56 und nach unten durch eine zweite Linie 57 begrenzt. Der primär mögliche Abstützflächenbereich 54 zeichnet sich dadurch aus, dass er keine erste Unregelmässigkeit 53 enthält, gross genug ist, um die Abstützfläche 44 aufzunehmen und im Vergleich zu anderen, diese Bedingung erfüllenden Bereichen 58, 59 den geringsten Abstand zur Soll-Abstützfläche 50 aufweist. Die beiden primär möglichen Bohrpositionsbereiche 55 ergeben sich aus dem primär möglichen Abstützflächenbereich 54 und der Lage der beiden Durchgangsöffnungen 45 relativ zur Abstützfläche 44.

Anschliessend wird in den primären möglichen Bohrpositionsbereichen 55 ein Verlauf von Armierungen in der Schachtwand 18 bestimmt. Im in Fig. 6 dargestellten Beispiel sind in beiden primären Bohrpositionsbereichen 55 zwei horizontal verlaufende Armierungen 60 und nur im rechten primären Bohrpositionsbereich 55 eine vertikal verlaufende Armierung 61 vorhanden.

Nach der Bestimmung des Verlaufs der Armierungen 60, 61 wird die Oberflächenkontur der beiden primären Bohrpositionsbereiche 55 mit einer dritten Erkennungsregel überprüft, um dritte Unregelmässigkeiten zu erkennen. Die Erkennung läuft analog zur oben beschriebenen Erkennung der ersten Unregelmässigkeiten ab. Der Unterschied besteht lediglich darin, dass ein dritter Schwellwert von 5 mm verwendet wird. Der Grenz-Abstand und der Grenz-Flächeninhalt bleiben unverändert. Im in Fig. 6 dargestellten Beispiel ergibt sich nur im linken primären Bohrpositionsbereichen 55 eine dritte Unregelmässigkeit 62.

Bei der anschliessenden Berücksichtigung der dritten Unregelmässigkeiten 62 werden auch die horizontal verlaufenden Armierungen 60 berücksichtigt. Dazu wird zuerst geprüft, ob die Soll-Bohrpositionsbereiche 51 innerhalb der beiden primär möglichen Bohrpositionsbereiche 55 liegen. Dies ist in dem in Fig. 6 dargestellten Beispiel nicht der Fall. Aus diesem Grund werden Start-Bereiche für einen sekundär möglichen Bohrpositionsbereich aus den Soll-Bohrpositionsbereichen 51 so bestimmt, dass die Soll-Bohrpositionsbereiche 51 in einer Haupt-Verschieberichtung, welche hier vertikal, also in der zweiten Richtung (z) verläuft, so weit verschoben werden, dass sie innerhalb der beiden primär möglichen Bohrpositionsbereiche 55 liegen. Anschliessend wird geprüft, ob in einem der Start-Bereiche für die sekundär möglichen Bohrpositionsbereiche eine in horizontaler Richtung verlaufende Armierung 60 vorhanden ist. Das ist hier im rechten Start-Bereich der Fall, so dass eine weitere Verschiebung in Haupt-Verschieberichtung nach unten notwendig ist. Neben der Prüfung auf eine in horizontaler Richtung verlaufende Armierung 60 wird ausserdem geprüft, ob ein Grad einer Überlappung jeweils einer Durchgangsöffnung 45 des Schienenbügelunterteils 16 mit der zweiten Unregelmässigkeit 62 kleiner als ein erster Grenzwert von 30% bezogen auf eine Durchgangsöffnung ist. Die beiden genannten Bedingungen bezüglich Armierungen 60 und dritte Unregelmässigkeiten 62 sind in den sekundären möglichen Bohrpositionsbereichen 63 erfüllt.

Anschliessend wird die Oberflächenkontur der beiden sekundären möglichen Bohrpositionsbereiche 63 mit einer zweiten Erkennungsregel überprüft, um zweite Unregelmässigkeiten zu erkennen. Dazu werden die Wandpunkte bestimmt, deren Abstand zur idealen Wandfläche grösser als ein zweiter Schwellwert von 4 mm ist. Dabei ergeben sich in den beiden sekundären möglichen Bohrpositionsbereichen 63 zweite Unregelmässigkeiten 64, die aus Übersichtlichkeitsgründen nicht in der Fig. 6, sondern in der separaten Fig. 7 mit Kreuzen dargestellt sind. Abschliessend wird innerhalb jedem der beiden sekundären möglichen Bohrpositionsbereiche 63 Bohrpositionen 65 bestimmt, die einerseits keine zweiten Unregelmässigkeiten 64 und ausserdem einen maximalen Abstand zur Armierung 61 aufweisen. Damit sind die Bohrpositionen 65 bestimmt, so dass die Montagevorrichtung 14 an diesen Bohrpositionen 65 automatisiert Löcher in die Schachtwand 18 bohren kann.

Wenn innerhalb der beiden sekundären möglichen Bohrpositionsbereichen 63 keine Bohrpositionen 65 gefunden werden können, die keine zweiten Unregelmässigkeiten 64 aufweisen und nicht mit einer Armierung 60, 61 kollidieren, dann wird mittels einer weiteren Verschiebung der beiden sekundären möglichen Bohrpositionsbereiche 63 innerhalb der beiden primären möglichen Bohrbereiche 55 wie oben beschrieben neue sekundäre mögliche Bohrbereiche gesucht. In diesen neuen sekundären möglichen Bohrbereichen wird dann wieder wie beschrieben eine Prüfung auf zweite Unregelmässigkeiten und Armierungen durchgeführt. Das beschriebene Vorgehen wird so lange wiederholt, bis entweder geeignete Bohrpositionen gefunden werden oder die gesamten primär möglichen Bohrpositionsbereiche erfolglos geprüft wurden.

Wenn noch keine geeigneten Bohrpositionen gefunden wurden, wird geprüft, ob es neben dem bzw. den bereits überprüften primären möglichen Abstützflächenbereichen 54 des Wandbereichs 52 weitere mögliche primäre Abstützflächenbereiche 58, 59 gibt. Ist dies der Fall, wird der primäre mögliche Abstützflächenbereich als neuer primär mögliche Abstützflächenbereich gewählt, der dem Soll-Abstützflächenbereich am nächsten liegt. Innerhalb des neuen primären Abstützflächenbereichs werden dann wie beschrieben geeignete Bohrpositionen gesucht. Ist die Suche wieder erfolglos, wird die beschriebene Prüfung auf einen neuen möglichen primären Abstützflächenbereich wiederholt.

Wenn innerhalb des möglichen Wandbereichs 52 keine geeigneten Bohrpositionen gefunden werden, wird ein neuer möglicher Wandbereich vorgegeben. Der neue mögliche Wandbereich ergibt sich durch eine Verschiebung des ursprünglichen möglichen Wandbereichs in der Haupt-Verschieberichtung. Die Verschiebung erfolgt so, dass ein primär möglicher Abstützflächenbereich und ein primär möglicher Bohrpositionsbereich, welcher an einem in Haupt-Verschieberichtung liegenden Rand des ursprünglichen möglichen Wandbereichs 52 auch im neuen möglichen Randbereich enthalten sind. Die Verschiebung erfolgt so dass der genannte Überlappungsbereich zwischen ursprünglichem und neuen möglichen Wandbereich möglichst gross ist. Damit ergibt sich auch die Richtung der Verschiebung, also beispielsweise vertikal nach oben oder unten. Im in Fig. 6 dargestellten Beispiel würde der Wandbereich deshalb nach unten verschoben. Um innerhalb des neuen möglichen Wandbereichs nach geeigneten Bohrpositionen suchen zu können, wird die Montagevorrichtung 14 innerhalb des Aufzugschachts 10 entsprechend verlagert. Anschliessend wird wie beschrieben innerhalb des neuen möglichen Wandbereichs nach geeigneten Bohrpositionen gesucht.

Wenn innerhalb eines möglichen Wandbereichs Bohrpositionen gefunden wurden, die keine zweiten Unregelmässigkeiten aufweisen, aber keinen oder einen zu geringen Abstand zu Armierungen aufweisen, können statt einer Verschiebung des möglichen Wandbereichs auch solche Bohrpositionen als geeignete Bohrpositionen bestimmt werden. Diese Entscheidung wird insbesondere von einem Bediener der Montagevorrichtung 14 getroffen.

Abschliessend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zur automatisierten Bestimmung einer Bohrposition (65) eines Bohrlochs (47) für ein Befestigungsmittel (46) zum Befestigen eines Bauteils (16) an einem möglichen Wandbereich (52) einer Wand (18), wobei
- das Bauteil (16) eine Anlagefläche (43) und eine Durchgangsöffnung (45) aufweist, wobei in einem befestigten Zustand des Bauteils (16) an der Wand (18) zumindest ein Teil der Anlagefläche (43) an einer Abstützfläche (44) der Wand (18) anliegt und das im Bohrloch (47) fixierte Befestigungsmittel (46) durch die Durchgangsöffnung (45) hindurch ragt,
- der mögliche Wandbereich (52) hauptsächlich plan ist und sich in einer ersten Richtung (x) und einer zur ersten Richtung (x) senkrechten zweiten Richtung (z) erstreckt und
- eine Soll-Abstützfläche (50) innerhalb des möglichen Wandbereichs (52) und damit ein Soll-Bohrpositionsbereich (51) für das Bohrloch (47) vorgegeben sind,
wobei das Verfahren folgende Verfahrensschritte aufweist:
- Bestimmen einer Oberflächenkontur des Wandbereichs (52),
- Überprüfen der Oberflächenkontur des Wandbereichs (52) und Erkennen von ersten Unregelmässigkeiten (53) in der Oberflächenkontur mittels einer ersten Erkennungsregel,
- Bestimmen eines primären möglichen Abstützflächenbereichs (54) und eines primären möglichen Bohrpositionsbereichs (55) für das Bohrloch (47), welche keine ersten Unregelmässigkeiten (53) der Oberflächenkontur aufweisen,
**gekennzeichnet durch** folgende Schritte:
- Überprüfen der Oberflächenkontur des primären möglichen Bohrpositionsbereichs (55) für das Bohrloch (47) und Erkennen von zweiten Unregelmässigkeiten (64) in der Oberflächenkontur mittels einer zweiten Erkennungsregel und
- Bestimmen der Bohrposition (65) für das Bohrloch (47) innerhalb des primären möglichen Bohrpositionsbereichs (55) in der Art, dass die Oberflächenkontur an der Bohrposition (65) keine zweiten Unregelmässigkeiten (64) aufweist.

2. Verfahren nach Anspruch 1,
**dadurch gekennzeichnet, dass**
der primäre mögliche Abstützflächenbereich (54) so bestimmt wird, dass ein Abstand zwischen Soll-Abstützfläche (50) und primärem möglichen Abstützflächenbereich (54) möglichst gering ist.

3. Verfahren nach Anspruch 1 oder 2,
**dadurch gekennzeichnet, dass**
beim Bestimmen der Oberflächenkontur
- Positionen von Wandpunkten ermittelt werden,
- mit den ermittelten Positionen der Wandpunkte eine ideale Wandfläche bestimmt wird und
- Abstände der einzelnen Wandpunkte von der idealen Wandfläche ermittelt werden.

4. Verfahren nach Anspruch 3,
**dadurch gekennzeichnet, dass**
die erste Erkennungsregel zum Erkennen von ersten Unregelmässigkeiten (53) in der Oberflächenkontur folgende Schritte umfasst:
- Bestimmen von Wandpunkten, welche einen Abstand zur idealen Wandfläche aufweisen, der grösser als ein erster Schwellwert ist,
- Zusammenfassen von benachbarten Wandpunkten, welche die genannte Bedingung erfüllen, und
- Erkennen einer ersten Unregelmässigkeit (53), wenn ein Flächeninhalt der zusammengefassten Wandpunkte grösser als ein Grenz-Flächeninhalt ist.

5. Verfahren nach einem der Ansprüche 1 bis 4,
**dadurch gekennzeichnet, dass**
der primäre mögliche Abstützflächenbereich (54) eine Form eines Rechtecks aufweist, wobei Kanten des genannten Rechtecks in die erste Richtung (x) bzw. die zweite Richtung (z) verlaufen und sich das genannte Rechteck in der ersten Richtung (x) über den gesamten möglichen Wandbereich (52) erstreckt.

6. Verfahren nach einem der Ansprüche 1 bis 5,
**dadurch gekennzeichnet, dass**
die zweite Erkennungsregel zum Erkennen von zweiten Unregelmässigkeiten (64) in der Oberflächenkontur folgende Schritte umfasst:
- Bestimmen von Wandpunkten, welche einen Abstand zur idealen Wandfläche aufweisen, der grösser als ein zweiter Schwellwert ist,
- Erkennen einer zweiten Unregelmässigkeit (64) bei jedem Wandpunkt, welcher die genannte Bedingung erfüllt.

7. Verfahren nach einem der Ansprüche 1 bis 6,
**dadurch gekennzeichnet, dass**
zwischen der Bestimmung des primären möglichen Bohrpositionsbereichs (55) und der Bohrposition (65) des Bohrlochs (47) mittels einer dritten Erkennungsregel dritte Unregelmässigkeiten (62) in der Oberflächenkontur des primären möglichen Bohrpositionsbereichs (55) erkannt werden, wobei die dritte Erkennungsregel folgende Schritte umfasst:
- Bestimmen von Wandpunkten, welche einen Abstand zur idealen Wandfläche aufweisen, der grösser als ein dritter Schwellwert ist und
- Zusammenfassen von benachbarten Wandpunkten, welche die genannte Bedingung erfüllen,
und ein sekundärer möglicher Bohrbereich (63) für das Bohrloch (47) in Abhängigkeit der dritten Unregelmässigkeiten (62) in der Oberflächenkontur bestimmt wird.

8. Verfahren nach Anspruch 7,
**dadurch gekennzeichnet, dass**
der sekundäre mögliche Bohrbereich (63) für das Bohrloch (47) so bestimmt wird, dass ein Grad einer Überlappung der Durchgangsöffnung (45) des Bauteils (16) mit den dritten Unregelmässigkeiten (62) in der Oberflächenkontur kleiner als ein erster Grenzwert ist.

9. Verfahren nach Anspruch 7 oder 8,
**dadurch gekennzeichnet, dass**
zur Bestimmung des sekundären möglichen Bohrbereichs (63) für das Bohrloch (47) nur eine Verschiebung in einer Haupt-Verschieberichtung (z) durchgeführt wird.

10. Verfahren nach einem der Ansprüche 1 bis 9,
**dadurch gekennzeichnet, dass**
ein Verlauf von Armierungen (60, 61) in der Wand (18) im primären möglichen Bohrpositionsbereich (55) für das Bohrloch (47) bestimmt und bei der Bestimmung der Bohrposition (65) des Bohrlochs (47) berücksichtigt werden.

11. Verfahren nach Anspruch 10,
**dadurch gekennzeichnet, dass**
der genannte Verlauf der Armierungen (60, 61) in der Wand (18) nur zusammen mit den zweiten Unregelmässigkeiten (64) in der Oberflächenkontur und/oder den dritten Unregelmässigkeiten (62) in der Oberflächenkontur berücksichtigt wird.

12. Verfahren nach Anspruch 10 oder 11,
**dadurch gekennzeichnet, dass**
die Bohrposition (65) des Bohrlochs (47) so bestimmt wird, dass ein Abstand der Bohrposition (65) zu erkannten Armierungen (60, 61) möglichst gross ist.

13. Verfahren nach einem der Ansprüche 1 bis 12,
**dadurch gekennzeichnet, dass**
in dem Fall, in dem keine Bohrposition (65) für das Bohrloch (47) innerhalb des möglichen Wandbereichs (52) gefunden wurde, ein neuer möglicher Wandbereich (52) vorgegeben wird.

14. Verfahren nach Anspruch 13,
**dadurch gekennzeichnet, dass**
das Verfahren von einer Montagevorrichtung (14) zur Durchführung von automatisierten Montageschritten ausgeführt wird und zur Vorgabe des neuen möglichen Wandbereichs (52) die Montagevorrichtung (14) verlagert wird.

15. Montagevorrichtung zur automatisierten Bestimmung einer Bohrposition (65) eines Bohrlochs (47) für ein Befestigungsmittel (46) zum Befestigen eines Bauteils (16) an einem möglichen Wandbereich (52) einer Wand (18), wobei
- das Bauteil (16) eine Anlagefläche (43) und eine Durchgangsöffnung (45) aufweist, wobei in einem befestigten Zustand des Bauteils (16) an der Wand (18) zumindest ein Teil der Anlagefläche (43) an einer Abstützfläche (44) der Wand (18) anliegt und das im Bohrloch (47) fixierte Befestigungsmittel (46) durch die Durchgangsöffnung (45) hindurch ragt,
- der mögliche Wandbereich (52) hauptsächlich plan ist und sich in einer ersten Richtung (x) und einer zur ersten Richtung (x) senkrechten zweiten Richtung (z) erstreckt und
- eine Soll-Abstützfläche (50) des Wandbereichs (52) und damit ein Soll-Bohrpositionsbereich (51) für das Bohrloch (47) vorgegeben sind,
wobei die Montagevorrichtung (14) eine Steuerungseinrichtung (37) aufweist, die dazu vorgesehen ist, folgende Schritte auszuführen:
- Bestimmen einer Oberflächenkontur des Wandbereichs (52),
- Überprüfen der Oberflächenkontur des Wandbereichs (52) und Erkennen von ersten Unregelmässigkeiten (53) in der Oberflächenkontur mittels einer ersten Erkennungsregel,
- Bestimmen eines primären möglichen Abstützflächenbereichs (54) und eines primären möglichen Bohrpositionsbereichs (55) für das Bohrloch (47), welche keine ersten Unregelmässigkeiten (53) der Oberflächenkontur aufweisen,
**dadurch gekennzeichnet, dass**
die Steuerungseinrichtung (37) weiter dazu vorgesehen ist, folgende Schritte auszuführen:
- Überprüfen der Oberflächenkontur des primären möglichen Bohrpositionsbereichs (55) für das Bohrloch (47) und Erkennen von zweiten Unregelmässigkeiten (64) in der Oberflächenkontur mittels einer zweiten Erkennungsregel und
- Bestimmen der Bohrposition (65) für das Bohrloch (47) innerhalb des primären möglichen Bohrpositionsbereichs (55) in der Art, dass die Oberflächenkontur an der Bohrposition (65) keine zweiten Unregelmässigkeiten (64) aufweist.

## Claims

1. A method for the automated determination of a drilling position (65) of a drill hole (47) for a fastening means (46) for fastening a component (16) to a possible wall area (52) of a wall (18), wherein
- the component (16) comprises a contact surface (43) and a through-opening (45), wherein, in the fastened state of the component (16) to the wall (18), at least a part of the contact surface (43) abuts against a support surface (44) of the wall (18) and the fastening means (46) fixed in the drill hole (47) projects through the through-opening (45),
- the possible wall area (52) is mainly flat and extends in a first direction (x) and a second direction (z) perpendicular to the first direction (x) and
- a planned support surface (50) inside the possible wall area (52) and therefore a planned drilling position area (51) for the drill hole (47) are preselected,
wherein the method comprises the following process steps:
- determination of a surface contour of the wall area (52),
- examination of the surface contour of the wall area (52) and detection of first irregularities (53) in the surface contour by means of a first detection rule,
- determination of a primary possible support surface area (54) and of a primary possible drilling position area (55) for the drill hole (47) which do not have any first irregularities (53) of the surface contour,
**characterised by** the following steps:
- examination of the surface contour of the primary possible drilling position area (55) for the drill hole (47) and detection of second irregularities (64) in the surface contour by means of a second detection rule and
- determination of the drilling position (65) for the drill hole (47) inside the primary possible drilling position area (55), in such a way that the surface contour at the drilling position (65) does not have any second irregularities (64).

2. The method according to claim 1,
**characterised in that**
the primary possible support surface area (54) is determined in such a way that a distance between the planned support surface (50) and the primary possible support surface area (54) is as small as possible.

3. The method according to claim 1 or 2,
**characterised in that**
when the surface contour is determined
- positions of wall points are determined,
- an ideal wall surface is determined with the ascertained positions of the wall points and
- distances of the individual wall points from the ideal wall surface are determined.

4. The method according to claim 3,
**characterised in that**
the first detection rule for detecting first irregularities (53) in the surface contour comprises the following steps:
- determination of wall points which have a distance from the ideal wall surface that is greater than a first threshold value,
- combination of adjacent wall points which meet the aforementioned condition, and
- detection of a first irregularity (53) when a surface area of the combined wall points is greater than a limiting surface area.

5. The method according to any one of claims 1 to 4,
**characterised in that**
the primary possible support surface area (54) has the shape of a rectangle, wherein edges of the aforementioned rectangle run in the first direction (x) or the second direction (z) and the aforementioned rectangle extends in the first direction (x) over the entire possible wall area (52).

6. The method according to any one of claims 1 to 5,
**characterised in that**
the second detection rule for detecting second irregularities (64) in the surface contour comprises the following steps:
- determination of wall points which have a distance from the ideal wall surface which is greater than a second threshold value,
- detection of a second irregularity (64) at each wall point which meets the aforementioned condition.

7. The method according to any one of claims 1 to 6,
**characterised in that**
third irregularities (62) in the surface contour of the primary possible drilling position area (55) are detected by means of a third detection rule between the determination of the primary possible drilling position area (55) and the drilling position (65) of the drill hole (47), wherein the third detection rule comprises the following steps:
- determination of wall points which have a distance from the ideal wall surface which is greater than a third threshold value and
- combination of adjacent wall points which meet the aforementioned condition, and a secondary possible drilling area (63) for the drill hole (47) is determined depending on the third irregularities (62) in the surface contour.

8. The method according to claim 7,
**characterised in that**
the secondary possible drilling area (63) for the drill hole (47) is determined, in such a way that a degree of overlap of the through-opening (45) of the component (16) with the third irregularities (62) in the surface contour is less than a first limiting value.

9. The method according to claim 7 or 8,
**characterised in that**
only a displacement in a main displacement direction (z) is carried out for the determination of the secondary possible drilling area (63) for the drill hole (47).

10. The method according to any one of claims 1 to 9,
**characterised in that**
a course of reinforcements (60, 61) in the wall (18) is determined in the primary possible drilling position area (55) for the drill hole (47) and is taken into account in the determination of the drilling position (65) of the drill hole (47).

11. The method according to claim 10,
**characterised in that**
the aforementioned course of the reinforcements (60, 61) in the wall (18) is taken into account only together with the second irregularities (64) in the surface contour and/or the third irregularities (62) in the surface contour.

12. The method according to claim 10 or 11,
**characterised in that**
the drilling position (65) of the drill hole (47) is determined such that a distance of the drilling position (65) from detected reinforcements (60, 61) is as large as possible.

13. The method according to any one of claims 1 to 12,
**characterised in that**
in the case in which no drilling position (65) of the drill hole (47) inside the possible wall area (52) has been found, a new possible wall area (52) is selected.

14. The method according to claim 13,
**characterised in that**
the method is carried out by an assembly device (14) for implementing automated assembly steps and the assembly device (14) is displaced for the selection of the new possible wall area (52).

15. An assembly device for the automated determination of a drilling position (65) of a drill hole (47) for a fastening means (46) for fastening a component (16) to a possible wall area (52) of a wall (18), wherein
- the component (16) comprises a contact surface (43) and a through-opening (45), wherein, in the fastened state of the component (16) to the wall (18), at least a part of the contact surface (43) abuts against a support surface (44) of the wall (18) and the fastening means (46) fixed in the drill hole (47) projects through the through-opening (45),
- the possible wall area (52) is mainly flat and extends in a first direction (x) and a second direction (z) perpendicular to the first direction (x) and
- a planned support surface (50) of the wall area (52) and therefore a planned drilling position area (51) for the drill hole (47) are preselected,
wherein the assembly device (14) comprises a control device (37), which is provided for carrying out the following steps:
- determination of a surface contour of the wall area (52),
- examination of the surface contour of the wall area (52) and detection of first irregularities (53) in the surface contour by means of a first detection rule,
- determination of a first primary possible support surface area (54) and of a primary possible drilling position area (55) for the drill hole (47) which does not have any first irregularities (53) of the surface contour,
**characterised in that**
the control device (37) is also provided to carry out the following steps:
- examination of the surface contour of the primary possible drilling position area (55) for the drill hole (47) and detection of second irregularities (64) in the surface contour by means of a second detection rule and
- determination of the drilling position (65) for the drill hole (47) inside the primary possible drilling position area (55), in such a way that the surface contour at the drilling position (65) does not have any second irregularities (64).

## Revendications

1. Procédé destiné à la détermination automatisée d'une position de forage (65) d'un trou de forage (47) pour un moyen de fixation (46) destiné à la fixation d'une pièce (16) sur une zone de paroi potentielle (52) d'une paroi (18),
- la pièce (16) présentant une surface d'appui (43) et une ouverture de passage (45), dans un état fixé de la pièce (16) à la paroi (18), au moins une partie de la surface d'appui (43) s'appuyant sur une surface de support (44) de la paroi (18) et le moyen de fixation (46) fixé dans le trou de forage (47) faisant saillie à travers l'ouverture de passage (45),
- la zone de paroi potentielle (52) étant principalement plane et s'étendant dans une première direction (x) et une seconde direction (z) perpendiculaire à la première direction (x) et
- une surface de support de consigne (50) à l'intérieur de la zone de paroi potentielle (52) et ainsi une zone de position de forage de consigne (51) pour le trou de forage (47) étant spécifiées,
le procédé présentant les étapes de procédé suivantes :
- la détermination d'un contour de surface de la zone de paroi (52),
- la vérification du contour de surface de la zone de paroi (52) et l'identification de premières irrégularités (53) dans le contour de surface au moyen d'une première règle d'identification,
- la détermination d'une zone primaire de surface de support potentielle (54) et d'une zone primaire de position de forage potentielle (55) pour le trou de forage (47) qui ne présentent pas de premières irrégularités (53) dans le contour de surface,
**caractérisé par** les étapes suivantes :
- la vérification du contour de surface de la zone primaire de position de forage potentielle (55) pour le trou de forage (47) et l'identification de deuxièmes irrégularités (64) dans le contour de surface au moyen d'une deuxième règle d'identification et
- la détermination de la position de forage (65) pour le trou de forage (47) dans la zone primaire de position de forage potentielle (55) de telle manière que le contour de surface à la position de forage (65) ne présente pas de deuxièmes irrégularités (64).

2. Procédé selon la revendication 1,
**caractérisé en ce que**
la zone primaire de surface de support potentielle (54) est déterminée de manière à ce qu'une distance entre la surface de support de consigne (50) et la zone primaire de surface de support potentielle (54) soit la plus petite possible.

3. Procédé selon la revendication 1 ou 2,
**caractérisé en ce que**
lors de la détermination du contour de la surface,
- des positions de points de paroi sont définies,
- une surface de paroi idéale est déterminée à l'aide des positions définies des points de paroi et
- des distances entre les différents points de paroi et la surface de paroi idéale sont définies.

4. Procédé selon la revendication 3,
**caractérisé en ce que**
la première règle d'identification permettant d'identifier des premières irrégularités (53) dans le contour de surface comprend les étapes suivantes :
- la détermination de points de paroi qui présentent une distance par rapport à la surface de paroi idéale, laquelle distance est supérieure à une première valeur seuil,
- le regroupement de points de paroi adjacents qui répondent à la condition susmentionnée, et
- l'identification d'une première irrégularité (53) si une aire des points de paroi regroupés est supérieure à une aire limite.

5. Procédé selon l'une des revendications 1 à 4,
**caractérisé en ce que**
la zone primaire de surface de support potentielle (54) présente une forme de rectangle, des bords dudit rectangle s'étendant dans la première direction (x) et la seconde direction (z), respectivement, et ledit rectangle s'étendant dans la première direction (x) sur toute la zone de paroi potentielle (52).

6. Procédé selon l'une des revendications 1 à 5,
**caractérisé en ce que**
la deuxième règle d'identification permettant d'identifier des deuxièmes irrégularités (64) dans le contour de surface comprend les étapes suivantes :
- la détermination de points de paroi qui présentent une distance par rapport à la surface de paroi idéale, laquelle distance est supérieure à une deuxième valeur seuil,
- l'identification d'une deuxième irrégularité (64) à chaque point de paroi qui satisfait la condition susmentionnée.

7. Procédé selon l'une des revendications 1 à 6,
**caractérisé en ce que**
entre la détermination de la zone primaire de position de forage potentielle (55) et la position de forage (65) du trou de forage (47), des troisièmes irrégularités (62) dans le contour de surface de la zone primaire de position de forage potentielle (55) sont identifiées au moyen d'une troisième règle d'identification, la troisième règle d'identification comprenant les étapes suivantes :
- la détermination de points de paroi qui présentent une distance par rapport à la surface de paroi idéale, laquelle distance est supérieure à une troisième valeur seuil et
- le regroupement de points de paroi adjacents qui répondent à la condition susmentionnée,
et une zone secondaire de forage potentielle (63) pour le trou de forage (47) étant déterminée en fonction des troisièmes irrégularités (62) dans le contour de surface.

8. Procédé selon la revendication 7,
**caractérisé en ce que**
la zone secondaire de forage potentielle (63) pour le trou de forage (47) est déterminée de telle sorte qu'un degré de chevauchement de l'ouverture de passage (45) de la pièce (16) avec les troisièmes irrégularités (62) dans le contour de surface est inférieur à une première valeur limite.

9. Procédé selon la revendication 7 ou 8,
**caractérisé en ce que**
pour la détermination de la zone secondaire de forage potentielle (63) pour le trou de forage (47), seul un déplacement dans une direction de déplacement principale (z) est effectué.

10. Procédé selon l'une des revendications 1 à 9,
**caractérisé en ce que**
un tracé d'armatures (60, 61) dans la paroi (18) est déterminé dans la zone primaire de position de forage potentielle (55) pour le trou de forage (47) et est pris en compte lors de la détermination de la position de forage (65) du trou de forage (47).

11. Procédé selon la revendication 10,
**caractérisé en ce que**
le tracé susmentionné des armatures (60, 61) dans la paroi (18) n'est pris en compte que conjointement avec les deuxièmes irrégularités (64) dans le contour de surface et/ou les troisièmes irrégularités (62) dans le contour de surface.

12. Procédé selon la revendication 10 ou 11,
**caractérisé en ce que**
la position de forage (65) du trou de forage (47) est déterminée de manière à ce que la distance entre la position de forage (65) et des armatures (60, 61) identifiées soit la plus grande possible.

13. Procédé selon l'une des revendications 1 à 12,
**caractérisé en ce que**
dans le cas où aucune position de forage (65) n'a été trouvée pour le trou de forage (47) dans la zone de paroi potentielle (52), une nouvelle zone de paroi potentielle (52) est spécifiée.

14. Procédé selon la revendication 13,
**caractérisé en ce que**
le procédé est réalisé par un dispositif de montage (14) permettant d'effectuer des étapes de montage automatisées et le dispositif de montage (14) est déplacé pour spécifier la nouvelle zone de paroi potentielle (52).

15. Dispositif de montage destiné à la détermination automatisée d'une position de forage (65) d'un trou de forage (47) pour un moyen de fixation (46) destiné à la fixation d'une pièce (16) sur une zone de paroi potentielle (52) d'une paroi (18),
- la pièce (16) présentant une surface d'appui (43) et une ouverture de passage (45), dans un état fixé de la pièce (16) à la paroi (18), au moins une partie de la surface d'appui (43) s'appuyant sur une surface de support (44) de la paroi (18) et le moyen de fixation (46) fixé dans le trou de forage (47) faisant saillie à travers l'ouverture de passage (45),
- la zone de paroi potentielle (52) étant principalement plane et s'étendant dans une première direction (x) et une seconde direction (z) perpendiculaire à la première direction (x) et
- une surface de support de consigne (50) de la zone de paroi (52) et ainsi une zone de position de forage de consigne (51) pour le trou de forage (47) étant spécifiées,
le dispositif de montage (14) présentant un appareil de commande (37) qui est prévu pour réaliser les étapes suivantes :
- la détermination d'un contour de surface de la zone de paroi (52),
- la vérification du contour de surface de la zone de paroi (52) et l'identification de premières irrégularités (53) dans le contour de surface au moyen d'une première règle d'identification,
- la détermination d'une zone primaire de surface de support potentielle (54) et d'une zone primaire de position de forage potentielle (55) pour le trou de forage (47) qui ne présentent pas de premières irrégularités (53) dans le contour de surface,
**caractérisé en ce que**
l'appareil de commande (37) est également prévu pour réaliser les étapes suivantes :
- la vérification du contour de surface de la zone primaire de position de forage potentielle (55) pour le trou de forage (47) et l'identification de deuxièmes irrégularités (64) dans le contour de surface au moyen d'une deuxième règle d'identification et
- la détermination de la position de forage (65) pour le trou de forage (47) dans la zone primaire de position de forage potentielle (55) de telle manière que le contour de surface à la position de forage (65) ne présente pas de deuxièmes irrégularités (64).
